## Europäisches Patentamt

## European Patent Office

## Office européen des brevets

(11) Veröffentlichungsnummer: **0 088 927**
**B1**

(12)

# EUROPÄISCHE PATENTSCHRIFT

(45) Veröffentlichungstag der Patentschrift:
**19.06.85**

(21) Anmeldenummer: **83101912.0**

(22) Anmeldetag: **26.02.83**

(51) Int. Cl.⁴: **C 09 J 3/00**, C 14 B 7/02,
B 32 B 23/00

(54) Klebstoffe auf Basis von Cyanacrylsäureestern und ihre Verwendung.

(30) Priorität: **13.03.82 DE 3209238**

(43) Veröffentlichungstag der Anmeldung:
**21.09.83 Patentblatt 83/38**

(45) Bekanntmachung des Hinweises auf die Patenterteilung:
**19.06.85 Patentblatt 85/25**

(84) Benannte Vertragsstaaten:
**AT BE CH DE FR GB LI NL SE**

(56) Entgegenhaltungen:
**Keine**

(73) Patentinhaber: **Henkel Kommanditgesellschaft auf Aktien, Postfach 1100 Henkelstrasse 67, D-4000 Düsseldorf-Holthausen (DE)**

(72) Erfinder: **Lange, Fritz, Dr., Baderweg 82, D-4300 Essen (DE)**
Erfinder: **Budnowski, Manfred, Dr., Am Nettchesfeld 53, D-4000 Düsseldorf 13 (DE)**
Erfinder: **Gruber, Werner, Dr., Franz-Kremer-Strasse 7, D-4052 Korschenbroich (DE)**

BUNDESDRUCKEREI BERLIN

## Beschreibung

Die vorliegende Erfindung betrifft Klebstoffe auf Basis von $\alpha$-Cyanacrylsäureestern mit verkürzter Abbindezeit und deren Verwendung an porösen Oberflächen.

Es ist bekannt, daß Klebstoffe auf Basis von Cyanacrylsäureestern sich durch kurze Abbindezeiten beim Verbinden bzw. Verkleben der verschiedensten Materialien auszeichnen. Diese Aushärtung erfolgt im allgemeinen aufgrund einer anionisch ausgelösten Polymerisation. Während sich Metalloberflächen, Glas und dergleichen sehr schnell miteinander verkleben lassen, treten Schwierigkeiten beim Verkleben von porösen Oberflächen auf. Insbesondere sind solche Schwierigkeiten zu beobachten bei Werkstoffen wie Holz, Papier, Leder und dergleichen.

Wird $\alpha$-Cyanacrylsäureester zum Verkleben von Materialien verwendet, deren Oberflächen sauer reagieren, wird die anionische Polymerisation inhibiert, und die Abbindezeit wird verlängert. Die Adhäsionsfestigkeit ist auch nicht zufriedenstellend.

Holz besitzt im allgemeinen einen Feuchtigkeitsgehalt von etwa 10 Gewichtsprozent bei normalen Bedingungen (22° C bei einer relativen Feuchtigkeit von 40%). Trotz dieses hohen Wassergehalts im Holzgewebe und insbesondere auf der Oberfläche der Holzmaterialien ist eine Abbindezeit von mehr als 10 bis 20 Minuten erforderlich, um die Verklebung mit den bekannten Klebstoffen auf Basis von Cyanacrylsäureestern vorzunehmen. Da die Cyanacrylsäureester wegen ihrer relativ geringen Viskosität tief in das Holzgewebe eindringen, entstehen zusätzliche Schwierigkeiten, so daß die Wirkung als »Schnellklebstoff« drastisch abnimmt.

Es ist bekannt, daß man diese Schwierigkeiten zumindest teilweise durch Zusätze von makrocyclischen Polyethern beheben kann. Speziell niedermolekulare Carbonsäuren sind allgemein als Zusätze bereits bekannt. Beim Zusatz dieser Verbindungen oder auch bestimmter Tenside auf Basis von Polyethylenglykolen wird die Aushärtezeit der Cyanacrylsäureester verkürzt.

Jedoch kann der Zusatz der bekannten Verbindungen auch zu einer Entstabilisierung der Cyanacrylsäureester führen, so daß sie nur noch eine begrenzte, für den Gebrauch unerwünscht verkürzte Lagerzeit haben.

Aufgabe der vorliegenden Erfindung war es daher, solche Zusätze zu finden, die einerseits die Aushärtegeschwindigkeit der Cyanacrylsäureester herabsetzen und so die Verklebungen von porösen, insbesondere sauren Oberflächen ermöglichen, andererseits aber nicht zu einer unerwünschten Verkürzung der Lagerfähigkeit der Klebstoffe führen.

Erfindungsgemäß wird die Aufgabe gelöst durch Klebstoffe auf Basis von $\alpha$-Cyanacrylsäureestern, welche gekennzeichnet sind durch einen Gehalt von 0,05 bis 3,0 Gewichtsprozent, bezogen auf $\iota$-Cyanacrylsäureester, an veresterten noch weitere freie Carboxylgruppen in der Endgruppe enthaltenden Polyoxyalkylen ($C_2$ bis $C_4$) eines Molgewichts von etwa 500 und 6 000, wobei gegebenenfalls die Polyoxyalkylene noch 2 bis 10 Estergruppierungen aus Dicarbonsäuren aufweisen können.

Vorzugsweise enthalten die erfindungsgemäß einzusetzenden Verbindungen zwischen etwa 6 und 80 Oxyalkylen bzw. Alkylenglykolbausteine, wobei im Falle des Vorhandendseins von Estergruppierungen in der Oxyalkylengruppe die Zahl der Ethergruppen mindestens das 3- bis 4fache, insbesondere wenigstens das 6fache der Summe von Ester- und Esterverbindungen ausmachen soll.

Bei den erfindungsgemäß einzusetzenden Verbindungen handelt es sich entweder um bekannte oder aber nach an sich bekannten Verfahren leicht zugängliche Verbindungen. So sind beispielsweise Polyethylenglykole (Polydiole), Polypropylenglykole im benötigten Molekularbereich von etwa 300 bis 5 000 handelsübliche Produkte. Das gleiche gilt für die ebenfalls mit endständigen OH-Gruppen tragenden Polybutylenglykole, die beispielsweise durch Ringöffnungspolymerisation über einen breiten Molekulargewichtsbereich erhältlich sind.

Die Einführung von gegebenenfalls gewünschten Estergruppen kann durch Umsetzen der endständige HO-Gruppen aufweisenden relativ niedermolekularen Polyoxyalkylendiole mit unterschüssigen Mengen an Dicarbonsäureanhydriden, -estern von niedermolekularen Alkanolen bzw. -chloriden in an sich bekannter Weise erfolgen. Als derartige »Kettenverlängerer« sind geeignet z. B. Maleinsäureoder Phthalsäureanhydrid, Adipinsäuredimethylester oder Bernsteinsäure- oder Terephthalsäureoder Cyclohexandicarbonsäurechlorid. Die Überführung der zwei endständige OH-Gruppen aufweisenden Polyether erfolgt durch Umsetzung mit reaktionsfähigen Carbonsäurederivaten, insbesondere den Anhydriden im geeigneten Molverhältnis. Hervorgehoben seien hier die Anhydride von Bernsteinsäure, Adipinsäure, Phthalsäure und insbesondere die von Maleinsäure, Citraconsäure und/oder Itaconsäure sowie schließlich die Fumarsäure selbst.

Selbstverständlich können die erfindungsgemäßen Zusätze mit Estergruppen auch in einem Reaktionsschritt durch Umsetzen von Polyethylenglykol mit Carbonsäureanhydrid hergestellt werden. In diesem Fall setzt man auf 1 Mol Polydiol weniger als 2 Mol Carbonsäureanhydrid ein, z. B. nur 1,5 Mol. In diesem Fall entsteht im statistischen Durchschnitt eine Verbindung, die über zwei Esterbindungen zwei Polyalkylenglykole mit endständigen sauren Esterfunktionen enthält.

Nach einer bevorzugten Ausführungsform werden zusätzlich zu den Polyalkylenglykolbiscarbonsäurehalbestern 0,05 bis 3 Gewichtsprozent, bezogen auf die Cyanacrylester einer unsubstituierten oder substituierten gesättigten oder ungesättigten aliphatischen oder cycloaliphatischen oder aromatischen Mono- oder Di-Carbonsäure oder des Halbesters einer Dicarbonsäure zugegeben.

Die Anzahl der Kohlenstoffatome in diesen Carbonsäuren soll zwischen 2 und 40 insbesondere 2 und 22 liegen. Durch den Zusatz kann eine weitere Verkürzung der Abbindezeit erreicht werden. Als Mono- oder Dicarbonsäuren eignen sich z. B. (Meth)-acrylsäure, Essigsäure, Propionsäure, Cyclohexancarbonsäure, Maleinsäure, Bernsteinsäure, Glutarsäure, Adipinsäure, Benzoesäure, Salicylsäure, Phenylessigsäure, Naphtoesäure, Phthalsäure, Isophthalsäure und Terepthalsäure. Als Halbester kommen die Methyl-, Ethyl-, Propyl- und Butylester der genannten Dicarbonsäuren in Frage. Als besonders geeignet erwies sich die Benzoesäure.

Als Basis für die mit den erfindungsgemäßen Zusätzen versehenen Klebstoffe eignet sich in erster Linie ein α-Cyanancrylsäureester, dessen alkoholischer Bestandteil eine Alkylgruppe mit 1 bis 12 Kohlenstoffatomen, die mit einem Sustituenten, wie einem Halogenatom oder einer Alkoxygruppe, substituiert sein kann, eine geradkettige oder verzweigtkettige Alkenylgruppe mit 2 bis 12 Kohlenstoffatomen, eine Alkinylgruppe mit 2 bis 12 Kohlenstoffatomen, eine Cycloalkylgruppe, eine Aralkylgruppe oder eine Arylgruppe sein kann. Beispiele für derartige Bestandteile sind: Methyl-, Ethyl-, n-Propyl-, Isopropyl-, n-Butyl-, Isobutyl-, Pentyl-, Hexyl-, Allyl-, Methallyl-, Crotyl-, Propargyl-, Cyclohexyl-, Benzyl-, Phenyl-, Cresyl-, 2-Chlorethyl-, 3-Chlorpropyl-, 2-Chlorbutyl-, Trifluorethyl-, 2-Methoxyethyl-, 3-Methoxybutyl- und 2-Ethoxyethylreste.

Der entsprechend der vorliegenden Erfindung verwendete α-Cyanacrylsäureklebstoff kann aus einem einzigen α-Cyanacrylsäureester oder einem Gemisch aus zwei oder mehreren α-Cyanacrylsäureestern bestehen. Aus praktischen Erwägungen werden meist einheitliche Ester verwendet, und zwar solche mit unsubstituierten Akylketten mit 1 bis 5 Kohlenstoffatomen.

Die Eigenschaften der Klebstoffe können günstig beeinflußt werden durch Zusätze wie anionische Polymerisationsinhibitoren und/oder Radikal-Polymerisationsinhibitoren, Verdickungsmittel, Weichmacher, Wärmestabilisatoren sowie Farbstoffe, Pigmente und dergleichen.

An anionischem Polymerisationsinhibitor können etwa 1 bis 1 000 ppm, bezogen auf das Gesamtgewicht der Klebstoffzusammensetzung, verwendet werden, um die Stabilität des Klebstoffs während der Lagerung zu erhöhen. Beispiele dafür sind Schwefeldioxid, aromatische Sulfonsäuren, aliphatische Sulfonsäuren und Phosphorsäuren. Geeignete Inhibitoren für die Radikalpolymerisation sind zum Beispiel Hydrochinon und Hydrochinonmonomethylether. Sie können in einer Menge von etwa 1 bis 5 000 ppm, bezogen auf das Gesamtgewicht der Klebstoffzusammensetzung, zugegeben werden, um gebildete Radikale einzufangen.

Zur Erhöhung der Viskosität kann ein Verdickungsmittel zugegeben werden, insbesondere, wenn der eingesetzte α-Cyanacrylsäureester nur eine Viskosität von mehreren mPa·s besitzt. Als Verdikkungsmittel können verschiedene Polymere verwendet werden, wie Poly-(methylmethacrylat), Copolymere von Methacrylsäureestern, Acrylkautschuke, Cellulosederivate, Polyvinylacetat und anpolymerisierte α-Cyanacrylsäureester. Die geeignete Menge an Verdickungsmittel kann bis zu 20 Gewichtsprozent, bezogen auf das Gesamtgewicht des Klebstoffs, betragen, obwohl meist geringere Mengen ausreichend sind.

Die Weichmacher, Farbstoffe, Pigmente usw. können in Abhängigkeit vom Verwendungszweck in Mengen zugegeben werden, die die Stabilität des α-Cyanacrylsäureesters nicht nachteilig beeinflussen.

Verwendung finden können die mit den erfindungsgemäßen Zusätzen versehenden Cyanacrylsäureester zum Verkleben von porösen Oberflächen mit sich selbst oder mit anderen. Insbesondere können sie eingesetzt werden zum Verkleben von Holz, Papier, Leder oder Textilien. Auch auf Metallen wie Aluminium oder Eisen können hohe Festigkeiten erzielt werden.

Bei der Dosierung der erfindungsgemäßen Zusätze ist einmal auf den alkoholischen Rest im Cyanacrylat Rücksicht zu nehmen und weiterhin auf die auch bei sorgfältiger Herstellung immer in geringster Menge vorhandenen Beimengungen, die, wenn auch nur geringfügig, das Eigenschaftsbild der Cyanacrylester beeinflussen.

Beispiele

Folgende Verbindungen wurden eingesetzt:

A)  Polyethylenglykol (M 400)bisphthalsäurehalbester
B)  Polyethylenglykol (M 600)bisphthalsäurehalbester
C)  Polyethylenglykol (M 400)bismaleinsäurehalbester
D)  Polyethylenglykol (M 600)bismaleinsäurehalbester
E)  Polyethylenglykol (M 400)bisbernsteinsäurehalbester
F)  Polyethylenglykol (M 600)bisbernsteinsäurehalbester
G)  Polyethylenglykol (M 400)bisendomethylentetrahydrophthalsäurehalbester
H)  Oligoester aus
    2 Mol Polyethylenglykol (M 600) und
    3 Mol Phthalsäureanhydrid

I)  Oligoester aus
    2 Mol Polyethylenglykol (M 600) und
    3 Mol Maleinsäureanhydrid
K)  Benzoesäure
L)  Essigsäure

Der Cyanacrylatklebstoff bestand aus

| | |
|---|---|
| $\alpha$-Cyanacrylsäureethylester | 90% |
| Poly-(methylmethacrylat) ($2_{sp}$/c 0,05) | 10% |

In der nachfolgenden Tabelle 1 sind neben der laufenden Nummer des Beispiels der erfindungsgemäße Zusatz in Gewichtsprozent und die Zeit in Sekunden bis zur sogenannten Handfestigkeit angegeben. Die Handfestigkeit wurde an Buchenholz anhand überlappender Verklebung ermittelt. Es ist die Zeit angegeben, die vergeht, bis die Holzstücke nicht mehr leicht von Hand gegeneinander verschoben werden können. Ferner sind die zugehörigen Zugscherfestigkeiten in N/mm² bei überlappender Verklebung angegeben. Diese wurden an folgenden Prüfkörpern ermittelt:

Prüfkörper für überlappende Verklebung
= Zugscherfestigkeit
100 × 25 × 5 mm trockenes Buchenholz
Überlappung 10 mm
verklebte Fläche 250 mm².

Es wurden jeweils 4 Verklebungen durchgeführt und der Mittelwert angegeben.

Prüfungsbedingungen: Die Zerreißmaschine arbeitete mit einem Vorschub von 15 mm/min.
Die Aushärtung erfolgte nach 24 h bei 22° C/40% relativer Luftfeuchtigkeit (Klimaraum).

Tabelle 1

| Beispiel | Zusatz | | überlappende Verklebung sec. | Zugscherfestigkeit N/mm² |
|---|---|---|---|---|
| 1 | A | 0,1% | 210 | 14,1 |
| 2 | A | 0,3% | 110 | 14,3 |
| 3 | B | 0,1% | 51 | 12,4 |
| 4 | C | 0,1% | 230 | 12,2 |
| 5 | C | 0,3% | 149 | 11,2 |
| 6 | D | 0,1% | 180 | 12,6 |
| 7 | D | 0,3% | 163 | 12,0 |
| 8 | E | 0,1% | 130 | 13,2 |
| 9 | E | 0,3% | 105 | 12,2 |
| 10 | F | 0,1% | 100 | 14,2 |
| 11 | F | 0,3% | 90 | 13,0 |
| 12 | G | 0,1% | 105 | 13,2 |
| 13 | G | 0,3% | 79 | 15,4 |
| 14 | H | 0,1% | 29 | 11,5 |

Tabelle 1 (Fortsetzung)

| Beispiel | Zusatz | | überlappende Verklebung sec. | Zugscherfestigkeit N/mm² |
|---|---|---|---|---|
| 15 | I | 0,1% | 35 | 10,2 |
| 16 | B | 0,1% | 59 | 11,2 |
| | H | 0,1% | | |
| 17 | B | 0,1% | 37 | 10,1 |
| | H | 0,2% | | |
| 18 | I | 0,1% | 29 | 8,2 |
| | L | 0,1% | | |

Zum Vergleich wurde die Handfestigkeit des Cyanacrylatklebstoffs ohne Zusatz gemessen. Sie betrug 900 sec. Die Zugscherfestigkeit betrug 12,4 N/mm² nach 24stündiger Lagerung bei 22°C/40% relativer Luftfeuchtigkeit.

## Patentansprüche

1. Klebstoffe auf Basis von $\alpha$-Cyanacrylsäureestern mit verkürzter Abbindezeit, gekennzeichnet durch einen Gehalt von 0,05 bis 3,0 Gewichtsprozent, bezogen auf $\alpha$-Cyanacrylsäureester, an veresterten noch weitere freie Carboxylgruppen in der Endgruppe enthaltenden Polyoxyalkylen ($C_2$ bis $C_4$) eines Molgewichts von etwa 500 und 6 000, wobei gegebenenfalls die Polyoxyalkylene noch 2 bis 10 Estergruppierungen aus Dicarbonsäuren aufweisen können.

2. Klebstoffe nach Anspruch 1, dadurch gekennzeichnet, daß die als Ausgangssubstanz eingesetzten Polyoxyalkylene aus 6 bis 80 Alkylenglykolbausteinen aufgebaut sind.

3. Klebstoffe nach Ansprüchen 1 und 2, dadurch gekennzeichnet, daß die Endgruppen mit freien Carboxylgruppen sich von Maleinsäure, Fumarsäure, Citracon- und/oder Itaconsäure ableiten.

4. Klebstoff nach Anspruch 1, gekennzeichnet durch einen zusätzlichen Gehalt von 0,05 bis 3,0 Gewichtsprozent, bezogen auf die Cyanacrylsäureester, einer gesättigten oder ungesättigten aliphatischen, cycloaliphatischen oder aromatischen Carbonsäure mit 2 bis 40, insbesondere 2 bis 22 Kohlenstoffatomen.

5. Verwendungen der Mischungen von Anspruch 1 und 2 zum Verkleben von porösen Oberflächen aus Leder, Holz und Papier sowie Textilien mit sich selbst oder anderen gegebenenfalls nicht porösen Substraten.

## Claims

1. Adhesives based on $\alpha$-cyanoacrylates having a shortened setting time, characterized by a content of from 0.05 to 3.0% by weight, based on $\alpha$-cyanoacrylate, of esterified polyoxyalkylene ($C_2$—$C_4$) containing other free carboxyl groups in the terminal group and having a molecular weight of from about 500 to 6 000, the polyoxyalkylenes optionally containing from 2 to 10 ester groups of dicarboxylic acids.

2. Adhesives as claimed in Claim 1, characterized in that the polyoxyalkylenes used as starting material are made up of 6 to 80 alkylene glycol units.

3. Adhesives as claimed in Claims 1 and 2, characterized in that the terminal groups containing free carboxyl groups are derived from maleic acid, fumaric acid, citraconic acid and/or itaconic acid.

4. Adhesives as claimed in Claim 1, characterized by an additional content of from 0.05 to 3.0% by weight, based on cyanoacrylate, of a saturated or unsaturated aliphatic, cycloaliphatic or aromatic carboxylic acid containing from 2 to 40 and, more particularly, from 2 to 22 carbon atoms.

5. The use of the mixtures claimed in Claims 1 and 2 for bonding porous surfaces of leather, wood, paper and also fabrics to one another or to other, optionally non-porous substrates.

**Revendications**

1. Adhésifs à base d'esters de l'acide $\alpha$-cyanoacrylique à prise rapide, caractérisés par une teneur de 0,05 à 3% en poids, calculè sur l'ester d'acide $\alpha$-cyanoacrylique, en polyoxyalcoyles ($C_2$ à $C_4$) esterifiés contenant encore des groupes carboxyles libres dans le groupe terminal, d'un poids moléculaire d'environ 500 et 6 000, les polyoxyalcoylènes pouvant éventuellement comporter encore 2 à 10 groupes d'esters d'acides décarboxyliques.

2. Adhésifs selon la revendication 1, caractérisé en ce que les polyoxyalcoylènes mis en oeuvre comme substance de départ, sont constitués par 6 à 80 éléments alcoylèneglycol.

3. Adhésifs selon les revendications 1 et 2, caractérisé en ce que les groupes terminaux, comportant des groupes carboxyles libres dérivent des acides maléique, fumarique, citraconique et/ou itaconique.

4. Adhésifs selon la revendication 1, caractérisé par une teneur supplémentair de 0,05 à 3% en poids, calculé sur l'ester d'acide cyanoacrylique, d'un acide carboxylique saturé ou insaturé, aliphatique, cycloaliphatique ou aromatique, avec 2 à 40, en particulier 2 à 22 atomes de carbone.

5. Application des mélanges selon les revendications 1 et 2 pour le collage de surfaces poreuses de cuir, de bois et de papier ainsi que de textile, sur elles-mêmes ou sur d'autres substrats, éventuellement non poreux.